# EUROPEAN PATENT APPLICATION

(11) **EP 4 760 969 A1**
(43) Date of publication of application: **17.06.2026**
(21) Application number: 23949048.5
(22) Date of filing: 17.11.2023
(51) Int. Cl.: H01M 50/59

(54) **INSULATING FILM FOR BATTERY CELL HOUSING, BATTERY CELL, AND SECONDARY BATTERY**

(30) Priority: 11.08.2023 CN 202322158288 U
(71) Applicant: AESC Jiangsu Co., Ltd., Wuxi, Jiangsu 214443 (CN); AESC HUBEI CO., LTD., Shiyan, Hubei 442002 (CN); AESC ORDOS CO., LTD., Ordos, Inner Mongolia 017200 (CN); AESC Shanghai Co., Ltd., Shanghai 201315 (CN)
(72) Inventor: CAO, Xingyu, Wuxi, Jiangsu 214443 (CN); CHEN, Hu, Wuxi, Jiangsu 214443 (CN)
(74) Representative: Becker, Eberhard
(86) International application number: PCT/CN2023/132200
(87) International publication number: WO 2025/035631

(57) **Abstract**

Provided in the present disclosure are an insulating film for a battery cell housing, a battery cell, and a secondary battery. A first insulating film is used for covering a first side surface; a second insulating film is used for covering a second side surface; a third insulating film is used for at least covering the junction between a third side surface and a bottom surface, and the junction between the third side surface and a top surface, so that the third side surface is partially exposed; and a fourth insulating film is used for at least covering the junction between a fourth side surface and the bottom surface, and the junction between the fourth side surface and the top surface, so that the fourth side surface is partially exposed. The first insulating film, the second insulating film, the third insulating film, and the fourth insulating film are independent of one another and can be directly processed into shapes matching the corresponding side surfaces of the battery cell housing, eliminating the need for further cutting, and reducing the number of folding areas on the insulating film and the number of times the insulating film is folded, thus reducing insulating film waste, reducing costs, and further effectively avoiding an increase in overall battery cell thickness caused by multilayer folding of the insulating film, thereby improving the space utilization rate of the secondary battery.

## Description

### Technical Field

The present disclosure relates to the field of battery technology, and in particular to an insulating film for a battery cell housing, a battery cell, and a secondary battery.

### Related Art

A secondary battery usually includes a plurality of battery cells arranged in sequence and a housing for accommodating the plurality of battery cells. Since the battery cells swell during operation, especially in the direction in which the battery cells are arranged, which causes the battery cells to squeeze one another and adversely affects their performance and service life. To solve the problem of swelling, in the related art, a gap is provided between two adjacent battery cells most of the time. However, in this method, the battery cells cannot be mutually fixed, so that the battery cells are required to be further installed on the housing of the secondary battery. To improve the insulation of the battery cells, the outer periphery of the battery cell housing is usually covered with a layer of insulating film, but the insulating film cannot be fixed to the housing of the secondary battery. Therefore, it is necessary to ensure that the side surfaces of the battery cell housing are at least partially exposed to achieve fixation with the housing of the secondary battery. The insulating films of the related art are all of an integral structure, that is, a larger-sized insulating film is used to cover all surfaces of the battery cell housing that need to be covered through cutting, folding, and other approaches. However, the approach of cutting the insulating film may result in some of the insulating film being wasted, and the approach of folding the insulating film may not only result in some of the insulating film being wasted but also an increase in the thickness of the battery cells, and that the space utilization of the secondary battery is lowered.

### Summary

The technical problem to be solved by the present disclosure is to overcome the defects in the related art that the integral insulating film tends to result in some of the insulating film being wasted and an increase in the thickness of the battery cell, and that the space utilization of the secondary battery is lowered, and the present disclosure provides an insulating film for a battery cell housing, a battery cell, and a secondary battery.

The present disclosure solves the above technical problem through the following technical solutions.

An insulating film for a battery cell housing is provided, and the battery cell housing includes a bottom surface and a top surface opposite to each other, a first side surface and a second side surface opposite to each other, and a third side surface and a fourth side surface opposite to each other. The insulating film for the battery cell housing includes a first insulating film, a second insulating film, a third insulating film, and a fourth insulating film independent of one another;
the first insulating film and the second insulating film are opposite to each other and spaced apart in a first direction, the first insulating film is used for covering the first side surface, and the second insulating film is used for covering the second side surface;
the third insulating film and the fourth insulating film are arranged opposite to each other, the third insulating film is used for at least covering a junction between the third side surface and the bottom surface and a junction between the third side surface and the top surface, so that the third side surface is partially exposed, and the fourth insulating film is used for at least covering a junction between the fourth side surface and the bottom surface and a junction between the fourth side surface and the top surface, so that the fourth side surface is partially exposed;
the first direction is a spacing direction between the first side surface and the second side surface.

In this solution, the first insulating film, the second insulating film, the third insulating film, and the fourth insulating film, as independent structures, can be directly processed into shapes adapted to the corresponding side surfaces of the battery cell housing, so the need for further cutting is eliminated and the number of folding areas on the insulating film and the number of times the insulating film is folded can be reduced. Therefore, waste of the insulating film is lowered, and costs are reduced. The reduction of the folding areas and folding times can also effectively avoid the increase in the overall thickness of the battery cell caused by multiple layers of folding of the insulating film, so that the space utilization of the secondary battery is improved. The exposed portions of the third side surface and the fourth side surface of the battery cell housing can be connected to the battery housing of the secondary battery or other adjacent battery cells, so that the connection strength between the battery cell and the battery housing of the secondary battery or the connection strength between the battery cells is improved, the vibration resistance of the secondary battery is enhanced, and the service life of the secondary battery is extended.

Preferably, the third insulating film is used for covering a portion of the third side surface, the fourth insulating film is used for covering a portion of the fourth side surface, and two ends of each of the third insulating film and the fourth insulating film in the first direction are connected to both the first insulating film and the second insulating film.

In this solution, gaps are prevented from being generated between the third insulating film and the fourth insulating film and the first insulating film and the second insulating film in the first direction in the above arrangement, so that the creepage distance between the battery cell and the electrical connector of the battery housing is increased, and the insulation of the battery cell is improved.

Preferably, the third insulating film includes a first insulating film unit and a second insulating film unit independent of each other, the first insulating film unit and the second insulating film unit are spaced apart in a second direction, the first insulating film unit is used for at least covering the junction between the third side surface and the bottom surface and a portion of the third side surface, the second insulating film unit is used for at least covering the junction between the third side surface and the top surface and a portion of the third side surface, and two ends of each of the first insulating film unit and the second insulating film unit in the first direction are connected to both the first insulating film and the second insulating film;
the fourth insulating film includes a third insulating film unit and a fourth insulating film unit independent of each other, the third insulating film unit and the fourth insulating film unit are spaced apart in the second direction, the third insulating film unit is used for at least covering the junction between the fourth side surface and the bottom surface and a portion of the fourth side surface, the fourth insulating film unit is used for at least covering the junction between the fourth side surface and the top surface and a portion of the fourth side surface, and two ends of each of the third insulating film unit and the fourth insulating film unit in the first direction are connected to both the first insulating film and the second insulating film;
the second direction is a spacing direction between the bottom surface and the top surface.

In this solution, the above arrangement enables the first insulating film unit, the second insulating film unit, the third insulating film unit, and the fourth insulating film unit to be directly produced and processed as independent structures, so that the usage of the insulating film is reduced, and costs are lowered.

Preferably, the first insulating film includes a first side surface covering area, a second side surface covering area, a third side surface covering area, a first bottom surface covering area, and a first top surface covering area, the first side surface covering area is used for covering the first side surface, the first side surface covering area extends toward the third side surface to form the second side surface covering area, the second side surface covering area is used for covering a portion of the third side surface, the first side surface covering area extends toward the fourth side surface to form the third side surface covering area, the third side surface covering area is used for covering a portion of the fourth side surface, the first side surface covering area extends toward the bottom surface to form the first bottom surface covering area, the first bottom surface covering area is used for covering at least a portion of the bottom surface, the first side surface covering area extends toward the top surface to form the first top surface covering area, and the first top surface covering area is used for covering at least a portion of the top surface;
the second insulating film includes a fourth side surface covering area, a fifth side surface covering area, a sixth side surface covering area, a second bottom surface covering area, and a second top surface covering area, the fourth side surface covering area is used for covering the second side surface, the fourth side surface covering area extends toward the third side surface to form the fifth side surface covering area, the fifth side surface covering area is used for covering a portion of the third side surface, the fourth side surface covering area extends toward the fourth side surface to form the sixth side surface covering area, the sixth side surface covering area is used for covering a portion of the fourth side surface, the fourth side surface covering area extends toward the bottom surface to form the second bottom surface covering area, the second bottom surface covering area is used for covering at least a portion of the bottom surface, the fourth side surface covering area extends toward the top surface to form the second top surface covering area, and the second top surface covering area is used for covering at least a portion of the top surface;
the second side surface covering area and the fifth side surface covering area are spaced apart in the first direction, and the third side surface covering area and the sixth side surface covering area are spaced apart in the first direction.

In this solution, the above arrangement enables all junctions among the first side surface and the second side surface, the third side surface, the fourth side surface, the bottom surface, and the top surface to be covered by the insulating film, so that the difficulty of film application is reduced, the flatness of film application is improved, warping and air channel phenomena are prevented from occurring, and risks such as poor creepage of the battery cell are also avoided.

Preferably, the first insulating film unit includes a seventh side surface covering area and a third bottom surface covering area, the seventh side surface covering area is used for covering a portion of the third side surface, both the second side surface covering area and the fifth side surface covering area at least partially overlap with the seventh side surface covering area, the seventh side surface covering area extends toward the bottom surface to form the third bottom surface covering area, the third bottom surface covering area is used for covering at least a portion of the bottom surface, and both the first bottom surface covering area and the second bottom surface covering area at least partially overlap with the third bottom surface covering area;
the second insulating film unit includes an eighth side surface covering area and a third top surface covering area, the eighth side surface covering area is used for covering a portion of the third side surface, both the second side surface covering area and the fifth side surface covering area at least partially overlap with the eighth side surface covering area, the eighth side surface covering area extends toward the top surface to form the third top surface covering area, the third top surface covering area is used for covering at least a portion of the top surface, and both the first top surface covering area and the second top surface covering area at least partially overlap with the third top surface covering area;
the third insulating film unit includes a ninth side surface covering area and a fourth bottom surface covering area, the ninth side surface covering area is used for covering a portion of the fourth side surface, both the third side surface covering area and the sixth side surface covering area at least partially overlap with the ninth side surface covering area, the ninth side surface covering area extends toward the bottom surface to form the fourth bottom surface covering area, the fourth bottom surface covering area is used for covering at least a portion of the bottom surface, and both the first bottom surface covering area and the second bottom surface covering area at least partially overlap with the fourth bottom surface covering area;
the fourth insulating film unit includes a tenth side surface covering area and a fourth top surface covering area, the tenth side surface covering area is used for covering a portion of the fourth side surface, both the third side surface covering area and the sixth side surface covering area at least partially overlap with the tenth side surface covering area, the tenth side surface covering area extends toward the top surface to form the fourth top surface covering area, the fourth top surface covering area is used for covering at least a portion of the top surface, and both the first top surface covering area and the second top surface covering area at least partially overlap with the fourth top surface covering area.

In this solution, the above arrangement ensures that all junctions between the third side surface and the fourth side surface and the bottom surface and the top surface are covered by the insulating film, so that the difficulty of film application is reduced, the flatness of film application is improved, warping and air channel phenomena are prevented from occurring, and risks such as poor creepage of the battery cell are also avoided.

Preferably, at least one of the third insulating film and the fourth insulating film covers an end surface of each of the first insulating film and the second insulating film away from the battery cell housing, and an end surface of each of the third insulating film and/or the fourth insulating film facing the first insulating film and the second insulating film has an adhesive layer.

In this solution, the third insulating film and the fourth insulating film may act as fixing structures for the first insulating film and the second insulating film, so that fixing of the insulating films for the entire battery cell housing is achieved, and that the first insulating film and the second insulating film do not need to be provided with separate fixing structures to achieve fixing relative to the battery cell housing, so the assembly process is simplified, and costs are reduced.

Preferably, the first bottom surface covering area and the second bottom surface covering area are spaced apart in the first direction, and the third insulating film and the fourth insulating film are spaced apart in a third direction, so that the bottom surface is partially exposed;
the third direction is a spacing direction between the third side surface and the fourth side surface.

In this solution, the exposed portion of the bottom surface of the battery housing can be thermally connected to the battery housing of the secondary battery or other adjacent battery cells, which may improve heat transfer efficiency, so that the heat transfer efficiency is enhanced, the sealing and durability of the secondary battery are improved, and the secondary battery is thus protected.

A battery cell includes a battery cell housing, a battery cell assembly, and the insulating film for the battery cell housing according to the above. The battery cell assembly is accommodated in the battery cell housing, and the insulating film for the battery cell housing covers an outer surface of the battery cell housing;
the outer surface of the battery cell housing includes a bottom surface and a top surface opposite to each other, a first side surface and a second side surface opposite to each other, and a third side surface and a fourth side surface opposite to each other. The first insulating film covers the first side surface, the second insulating film covers the second side surface, the third insulating film at least covers the junction between the third side surface and the bottom surface and the junction between the third side surface and the top surface, so that the third side surface is partially exposed, and the fourth insulating film at least covers the junction between the fourth side surface and the bottom surface and the junction between the fourth side surface and the top surface, so that the fourth side surface is partially exposed.

In this solution, the insulating film covers the outer surface of the battery cell housing to provide insulation for the battery cell. The first insulating film, the second insulating film, the third insulating film, and the fourth insulating film, as independent structures, can be directly processed into shapes adapted to the corresponding side surfaces of the battery cell housing, so the need for further cutting is eliminated and the number of folding areas on the insulating film and the number of times the insulating film is folded can be reduced. Therefore, waste of the insulating film is lowered, and costs are reduced. The reduction of the folding areas and folding times can also effectively avoid the increase in the overall thickness of the battery cell caused by multiple layers of folding of the insulating film, so that the space utilization of the secondary battery is improved. The exposed portions of the third side surface and the fourth side surface of the battery cell housing can be connected to the battery housing of the secondary battery or other adjacent battery cells, so that the connection strength between the battery cell and the battery housing of the secondary battery or the connection strength between the battery cells is improved, the vibration resistance of the secondary battery is enhanced, and the service life of the secondary battery is extended.

A secondary battery includes a battery housing and a plurality of battery cells according to the above. The battery housing has an accommodating cavity, the plurality of battery cells are all accommodated in the accommodating cavity, and the plurality of battery cells are arranged sequentially in the first direction.

In this solution, by using the battery cell as described above, the battery cell housing can expose the third side surface and the fourth side surface used for connecting to the battery housing or other adjacent battery cells, so that the connection strength between the battery cell and the battery housing of the secondary battery or the connection strength between the battery cells is improved, the vibration resistance of the secondary battery is enhanced, and the service life of the secondary battery is extended.

Preferably, the secondary battery satisfies one or more of the following conditions:
a. the third side surface and/or the fourth side surface is partially exposed to form a first connection portion of the battery cell housing, a fixing adhesive layer is provided on the first connection portion, and the battery cell is bonded to an inner wall of the accommodating cavity or an adjacent battery cell through the fixing adhesive layer; and
b. the bottom surface is partially exposed to form a second connection portion of the battery cell housing, a thermally-conductive adhesive layer is provided on the second connection portion, and the battery cell is bonded to the inner wall of the accommodating cavity or an adjacent battery cell through the thermally-conductive adhesive layer.

In this solution, the battery cell and the battery housing of the secondary battery are connected, so that the connection strength between the battery cell and the battery housing of the secondary battery is improved, the vibration resistance of the secondary battery is enhanced, and the service life of the secondary battery is extended. Through the connection between battery cells, collision between battery cells is reduced, the vibration resistance of the secondary battery is enhanced, and the service life of the secondary battery is extended. Through the connection between the battery cell and the battery housing or between battery cells through a thermally-conductive adhesive, the heat transfer efficiency is enhanced, the sealing and durability of the secondary battery are improved, and the secondary battery is protected.

The positive progressive effects of the present disclosure are as follows. The first insulating film, the second insulating film, the third insulating film, and the fourth insulating film, as independent structures, can be directly processed into shapes adapted to the corresponding side surfaces of the battery cell housing, so the need for further cutting is eliminated and the number of folding areas on the insulating film and the number of times the insulating film is folded can be reduced. Therefore, waste of the insulating film is lowered, and costs are reduced. The reduction of the folding areas and folding times can also effectively avoid the increase in the overall thickness of the battery cell caused by multiple layers of folding of the insulating film, so that the space utilization of the secondary battery is improved. The exposed portions of the third side surface and the fourth side surface of the battery cell housing can be connected to the battery housing of the secondary battery or other adjacent battery cells, so that the connection strength between the battery cell and the battery housing of the secondary battery or the connection strength between the battery cells is improved, the vibration resistance of the secondary battery is enhanced, and the service life of the secondary battery is extended.

### Description of the Drawings

FIG. 1 is a schematic view of an internal structure of a secondary battery according to an embodiment of the present disclosure.
FIG. 2 is a schematic perspective view of a structure of a battery cell according to an embodiment of the present disclosure.
FIG. 3 is an unfolded schematic view of a first insulating film according to an embodiment of the present disclosure.
FIG. 4 is an unfolded schematic view of a first insulating film unit according to an embodiment of the present disclosure.
FIG. 5 is a schematic view of steps of a covering process of an insulating film and a battery cell housing according to an embodiment of the present disclosure.
FIG. 6 is a schematic view of another step of the covering process of the insulating film and the battery cell housing according to an embodiment of the present disclosure.
FIG. 7 is a schematic view of another step of the covering process of the insulating film and the battery cell housing according to an embodiment of the present disclosure.
FIG. 8 is a schematic view of another step of the covering process of the insulating film and the battery cell housing according to an embodiment of the present disclosure.
FIG. 9 is a schematic view of another step of the covering process of the insulating film and the battery cell housing according to an embodiment of the present disclosure.

### Description of Reference Numerals:

battery housing 1, accommodating cavity 11, battery cell 2, battery cell housing 21, bottom surface 211, top surface 212, first side surface 213, second side surface 214, third side surface 215, fourth side surface 216, first connection portion 217, second connection portion 218, insulating film 3, first insulating film 31, first side surface covering area 311, second side surface covering area 312, third side surface covering area 313, first bottom surface covering area 314, first top surface covering area 315, second insulating film 32, fourth side surface covering area 321, fifth side surface covering area 322, sixth side surface covering area 323, second bottom surface covering area 324, second top surface covering area 325, third insulating film 33, first insulating film unit 331, seventh side surface covering area 3311, third bottom surface covering area 3312, second insulating film unit 332, eighth side surface covering area 3321, third top surface covering area 3322, fourth insulating film 34, third insulating film unit 341, ninth side surface covering area 3411, fourth bottom surface covering area 3412, fourth insulating film unit 342, tenth side surface covering area 3421, and fourth top surface covering area 3422.

### Specific Embodiments

Preferred embodiments are described in the following paragraphs together with the accompanying drawings to illustrate the present disclosure more clearly and completely.

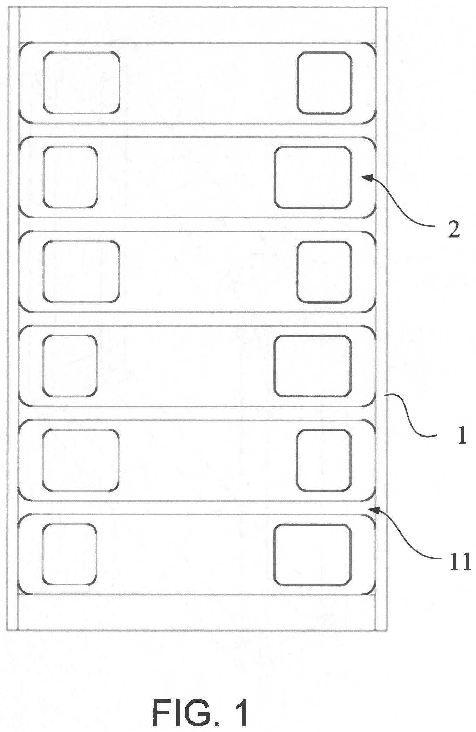

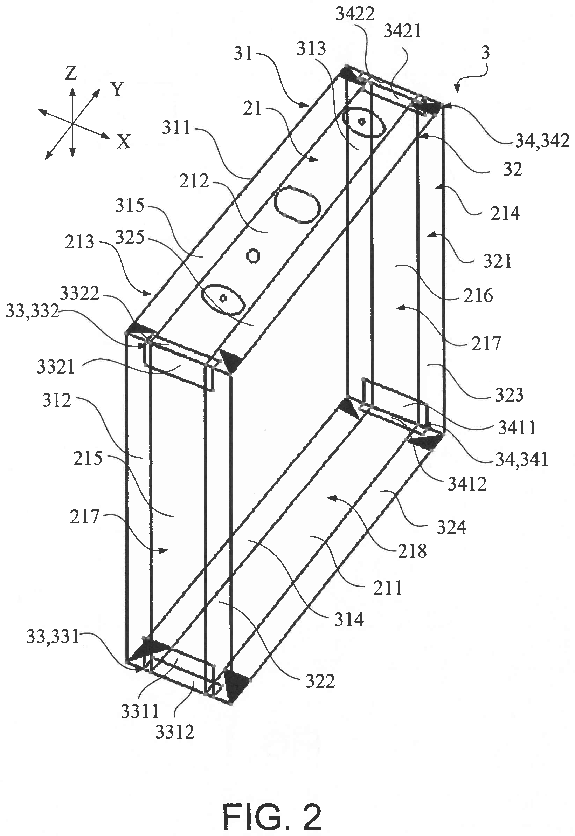

As shown in FIG. 1 and FIG. 2, this embodiment discloses a secondary battery used for supplying power to electrical equipment such as electric vehicles. The secondary battery includes a battery housing 1 and a plurality of battery cells 2, and the battery housing 1 is used for accommodating and protecting the plurality of battery cells 2.

As shown in FIG. 1, an inner portion of the battery housing 1 has an accommodating cavity 11, the battery cells 2 are all accommodated in the accommodating cavity 11, and the battery cells 2 are fixedly connected to the battery housing 1 to prevent the battery cells 2 from separating from the battery housing 1 and avoid failure of the secondary battery.

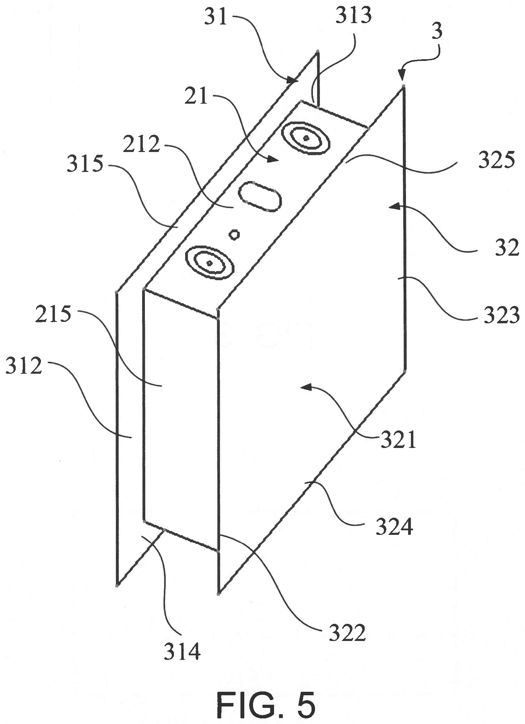

As shown in FIG. 2 and FIG. 5, the battery cell 2 includes a battery cell housing 21, a battery cell assembly (not shown), and an insulating film 3 for the battery cell housing 21, the battery cell assembly is accommodated in the battery cell housing 21, and the insulating film 3 for the battery cell housing 21 covers an outer surface of the battery cell housing 21. Specifically, the outer surface of the battery cell housing 21 includes a bottom surface 211 and a top surface 212 opposite to each other along a horizontal plane, a first side surface 213 and a second side surface 214 opposite to each other in a third direction (Y direction in FIG. 2), and a third side surface 215 and a fourth side surface 216 opposite to each other in a first direction (X direction in FIG. 2). Lower ends of the first side surface 213, the second side surface 214, the third side surface 215, and the fourth side surface 216 are all connected to the bottom surface 211, upper ends of the first side surface 213, the second side surface 214, the third side surface 215, and the fourth side surface 216 are all connected to the top surface 212, and two ends of each of the first side surface 213 and the second side surface 214 in the third direction are connected to both the third side surface 215 and the fourth side surface 216, so as to form the battery housing 1 in a rectangular parallelepiped shape.

As shown in FIG. 2, in this embodiment, the first side surface 213 and the second side surface 214 have equal widths, the third side surface 215 and the fourth side surface 216 have equal widths, and the widths of the first side surface 213 and the second side surface 214 are greater than the widths of the third side surface 215 and the fourth side surface 216. The first direction is a spacing direction between the first side surface 213 and the second side surface 214, that is, a thickness direction of the battery cell 2. The second direction (Z direction in FIG. 2) is a spacing direction between the bottom surface 211 and the top surface 212, that is, a height direction of the battery cell 2. The third direction is a spacing direction between the third side surface 215 and the fourth side surface 216, that is, a length direction of the battery cell 2. The first direction and the third direction are two directions perpendicular to each other in the same horizontal plane, and the second direction is perpendicular to the plane formed by the first direction and the third direction.

In other alternative embodiments, it may also be that the widths of the first side surface 213 and the second side surface 214 are less than the widths of the third side surface 215 and the fourth side surface 216. In this state, the second direction is still the height direction of the battery cell 2, but the first direction is the length direction of the battery cell 2, and the third direction is the thickness direction of the battery cell 2.

As shown in FIG. 2 to FIG. 4, the insulating film 3 for the battery cell housing 21 includes a first insulating film 31, a second insulating film 32, a third insulating film 33, and a fourth insulating film 34 independent of one another. The term "independent of one another" in this embodiment means that the first insulating film 31, the second insulating film 32, the third insulating film 33, and the fourth insulating film 34 are all independent components, may be produced and processed separately, and may be assembled after formation to form the insulating film 3 for the battery cell housing 21.

When the insulating film 3 covers the battery cell housing 21, the insulating film 3 is in a use state. In this state, the first insulating film 31 and the second insulating film 32 are opposite to each other and spaced apart in the first direction, the first insulating film 31 completely covers the first side surface 213, and the second insulating film 32 completely covers the second side surface 214. The third insulating film 33 and the fourth insulating film 34 are arranged opposite to each other, and the third insulating film 33 covers a junction between the third side surface 215 and the bottom surface 211 (i.e., an edge formed by the intersection of the third side surface 215 and the bottom surface 211) and a junction between the third side surface 215 and the top surface 212 (i.e., an edge formed by the intersection of the third side surface 215 and the top surface 212), so that the third side surface 215 is partially exposed. The fourth insulating film 34 covers a junction between the fourth side surface 216 and the bottom surface 211 (i.e., an edge formed by the intersection of the fourth side surface 216 and the bottom surface 211) and a junction between the fourth side surface 216 and the top surface 212 (i.e., an edge formed by the intersection of the fourth side surface 216 and the top surface 212), so that the fourth side surface 216 is partially exposed.

The first insulating film 31, the second insulating film 32, the third insulating film 33, and the fourth insulating film 34, as independent structures, may be directly processed into shapes adapted to the corresponding side surfaces of the battery cell housing 21, so the need for further cutting is eliminated and the number of folding areas on the insulating film 3 and the number of times the insulating film 3 is folded may be reduced. Therefore, waste of the insulating film 3 is lowered, and costs are reduced. The reduction of the folding areas and folding times may also effectively avoid the increase in the overall thickness of the battery cell 2 caused by multiple layers of folding of the insulating film 3, so that the space utilization of the secondary battery is improved.

The portion of the third side surface 215 exposed from the insulating film 3 and the portion of the fourth side surface 216 exposed from the insulating film 3 both form a first connection portion 217. The battery cell 2 is connected to the battery housing 1 of the secondary battery or other adjacent battery cells 2 through the first connection portion 217, so that the connection strength between the battery cell 2 and the battery housing 1 of the secondary battery or the connection strength between the battery cells 2 is improved, the vibration resistance of the secondary battery is enhanced, and the service life of the secondary battery is extended.

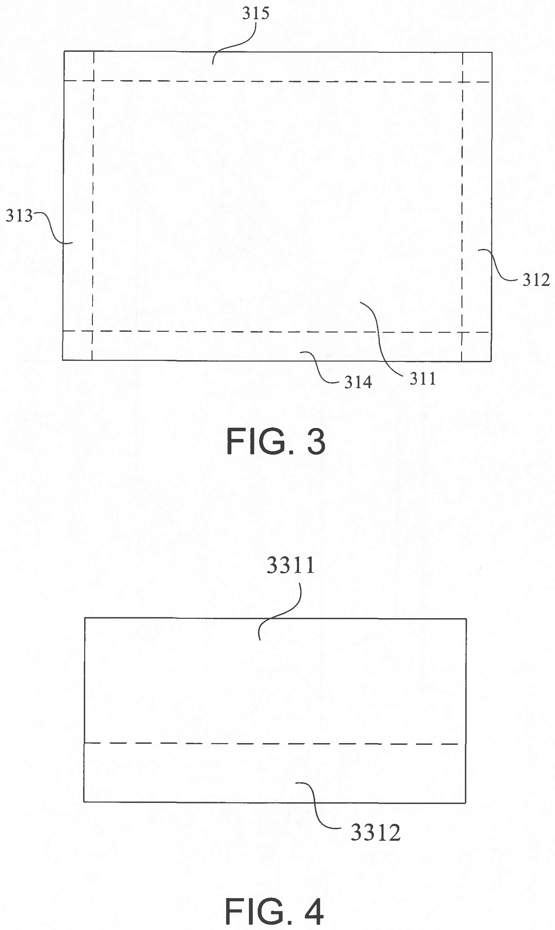

Specifically, as shown in FIG. 2 and FIG. 3, the first insulating film 31 includes a first side surface covering area 311, a second side surface covering area 312, a third side surface covering area 313, a first bottom surface covering area 314, and a first top surface covering area 315. The first side surface covering area 311 completely covers the first side surface 213. The first side surface covering area 311 extends toward the third side surface 215 to form the second side surface covering area 312, and the second side surface covering area 312 covers a portion of the third side surface 215, so that a junction between the first side surface 213 and the third side surface 215 (i.e., an edge formed by the intersection of the first side surface 213 and the third side surface 215) may be completely covered by the first insulating film 31. In this way, the difficulty of film application is reduced, the flatness of film application is improved, warping and air channel phenomena are prevented from occurring, and risks such as poor creepage of the battery cell 2 are also avoided. The first side surface covering area 311 extends toward the fourth side surface 216 to form the third side surface covering area 313, and the third side surface covering area 313 covers a portion of the fourth side surface 216, so that a junction between the first side surface 213 and the fourth side surface 216 (i.e., an edge formed by the intersection of the first side surface 213 and the fourth side surface 216) may be completely covered by the first insulating film 31. In this way, the difficulty of film application is reduced, the flatness of film application is improved, warping and air channel phenomena are prevented from occurring, and risks such as poor creepage of the battery cell 2 are also avoided. The first side surface covering area 311 extends toward the bottom surface 211 to form the first bottom surface covering area 314, and the first bottom surface covering area 314 is used for covering at least a portion of the bottom surface 211, so that a junction between the first side surface 213 and the bottom surface 211 (i.e., an edge formed by the intersection of the first side surface 213 and the bottom surface 211) may be completely covered by the first insulating film 31. In this way, the difficulty of film application is reduced, the flatness of film application is improved, warping and air channel phenomena are prevented from occurring, and risks such as poor creepage of the battery cell 2 are also avoided. The first side surface covering area 311 extends toward the top surface 212 to form the first top surface covering area 315, and the first top surface covering area 315 is used for covering a portion of the top surface 212, so that a junction between the first side surface 213 and the top surface 212 (i.e., an edge formed by the intersection of the first side surface 213 and the third side surface 215) may be completely covered by the first insulating film 31. In this way, the difficulty of film application is reduced, the flatness of film application is improved, warping and air channel phenomena are prevented from occurring, and risks such as poor creepage of the battery cell 2 are also avoided.

As shown in FIG. 2 and FIG. 5, the shape of the second insulating film 32 in this embodiment is completely the same as the shape of the first insulating film 31. The second insulating film 32 includes a fourth side surface covering area 321, a fifth side surface covering area 322, a sixth side surface covering area 323, a second bottom surface covering area 324, and a second top surface covering area 325. The fourth side surface covering area 321 is opposite to the first side surface covering area 311, the fifth side surface covering area 322 is opposite to the second side surface covering area 312, the sixth side surface covering area 323 is opposite to the third side surface covering area 313, the second bottom surface covering area 324 is opposite to the first bottom surface covering area 314, and the second top surface covering area 325 is opposite to the first top surface covering area 315. The fourth side surface covering area 321 completely covers the second side surface 214. The fourth side surface covering area 321 extends toward the third side surface 215 to form the fifth side surface covering area 322, and the fifth side surface covering area 322 covers a portion of the third side surface 215, so that a junction between the second side surface 214 and the third side surface 215 (i.e., an edge formed by the intersection of the second side surface 214 and the third side surface 215) may be completely covered by the second insulating film 32. In this way, the difficulty of film application is reduced, the flatness of film application is improved, warping and air channel phenomena are prevented from occurring, and risks such as poor creepage of the battery cell 2 are also avoided. The fourth side surface covering area 321 extends toward the fourth side surface 216 to form the sixth side surface covering area 323, and the sixth side surface covering area 323 covers a portion of the fourth side surface 216, so that a junction between the second side surface 214 and the fourth side surface 216 (i.e., an edge formed by the intersection of the second side surface 214 and the fourth side surface 216) may be completely covered by the second insulating film 32. In this way, the difficulty of film application is reduced, the flatness of film application is improved, warping and air channel phenomena are prevented from occurring, and risks such as poor creepage of the battery cell 2 are also avoided. The fourth side surface covering area 321 extends toward the bottom surface 211 to form the second bottom surface covering area 324, and the second bottom surface covering area 324 covers a portion of the bottom surface 211, so that a junction between the second side surface 214 and the bottom surface 211 (i.e., an edge formed by the intersection of the second side surface 214 and the bottom surface 211) may be completely covered by the second insulating film 32. In this way, the difficulty of film application is reduced, the flatness of film application is improved, warping and air channel phenomena are prevented from occurring, and risks such as poor creepage of the battery cell 2 are also avoided. The fourth side surface covering area 321 extends toward the top surface 212 to form the second top surface covering area 325, and the second top surface covering area 325 covers a portion of the top surface 212, so that a junction between the second side surface 214 and the top surface 212 (i.e., an edge formed by the intersection of the second side surface 214 and the third side surface 215) may be completely covered by the second insulating film 32. In this way, the difficulty of film application is reduced, the flatness of film application is improved, warping and air channel phenomena are prevented from occurring, and risks such as poor creepage of the battery cell 2 are also avoided.

In other alternative embodiments, the shape of the second insulating film 32 and the shape of the first insulating film 31 may also be not completely the same, and may be specifically designed according to the shape of the battery cell housing 21.

As shown in FIG. 2, the third insulating film 33 covers a portion of the third side surface 215, and the fourth insulating film 34 covers a portion of the fourth side surface 216. Two ends of each of the third insulating film 33 and the fourth insulating film 34 in the first direction are connected to both the first insulating film 31 and the second insulating film 32, so that gaps are prevented from being generated between the third insulating film 33 and the fourth insulating film 34 and the first insulating film 31 and the second insulating film 32 in the first direction. In this way, the creepage distance between the battery cell 2 and the electrical connector of the battery housing 1 is increased, and the insulation of the battery cell 2 is improved.

As shown in FIG. 2, the third insulating film 33 includes a first insulating film unit 331 and a second insulating film unit 332 independent of each other, and the first insulating film unit 331 and the second insulating film unit 332 are spaced apart in the second direction, so that the third side surface 215 may be partially exposed to form the first connection portion 217. Two ends of each of the first insulating film unit 331 and the second insulating film unit 332 in the first direction are connected to both the first insulating film 31 and the second insulating film 32. The fourth insulating film 34 includes a third insulating film unit 341 and a fourth insulating film unit 342 independent of each other, and the third insulating film unit 341 and the fourth insulating film unit 342 are spaced apart in the second direction, so that the fourth side surface 216 may be partially exposed to form the first connection portion 217. Two ends of each of the third insulating film unit 341 and the fourth insulating film unit 342 in the first direction are connected to both the first insulating film 31 and the second insulating film 32. The term "independent of each other" in this embodiment means that the first insulating film unit 331, the second insulating film unit 332, the third insulating film unit 341, and the fourth insulating film unit 342 are all independent components, may be produced and processed separately, and may be assembled after formation to form the insulating film 3 of the battery housing 1, so that the usage of the insulating film 3 is reduced, and costs are lowered.

Specifically, as shown in FIG. 4, the first insulating film unit 331 includes a seventh side surface covering area 3311 and a third bottom surface covering area 3312. The seventh side surface covering area 3311 covers a portion of the third side surface 215. The second side surface covering area 312 and the fifth side surface covering area 322 both at least partially overlap with the seventh side surface covering area 3311, so that gaps are prevented from being generated between the first insulating film unit 331 and the first insulating film 31 and the second insulating film 32 in the first direction. In this way, the creepage distance between the battery cell 2 and the electrical connector of the battery housing 1 is increased, and the insulation of the battery cell 2 is improved. The seventh side surface covering area 3311 extends toward the bottom surface 211 to form the third bottom surface covering area 3312, and the third bottom surface covering area 3312 covers a portion of the bottom surface 211, so that the junction between the third side surface 215 and the bottom surface 211 (i.e., the edge formed by the intersection of the third side surface 215 and the bottom surface 211) may be completely covered by the first insulating film unit 331. In this way, the difficulty of film application is reduced, the flatness of film application is improved, warping and air channel phenomena are prevented from occurring, and risks such as poor creepage of the battery cell 2 are also avoided. The first bottom surface covering area 314 and the second bottom surface covering area 324 both partially overlap with the third bottom surface covering area 3312, so that gaps are prevented from being generated at the intersections. In this way, the creepage distance between the battery cell 2 and the electrical connector of the battery housing 1 is increased, and the insulation of the battery cell 2 is improved.

As shown in FIG. 2, the shape of the second insulating film unit 332 in this embodiment is completely the same as the shape of the first insulating film unit 331. The second insulating film unit 332 includes an eighth side surface covering area 3321 and a third top surface covering area 3322. The eighth side surface covering area 3321 is opposite to the seventh side surface covering area 3311, and the third top surface covering area 3322 is opposite to the third bottom surface covering area 3312. The eighth side surface covering area 3321 covers a portion of the third side surface 215. The second side surface covering area 312 and the fifth side surface covering area 322 both partially overlap with the eighth side surface covering area 3321, so that gaps are prevented from being generated between the second insulating film unit 332 and the first insulating film 31 and the second insulating film 32 in the first direction. In this way, the creepage distance between the battery cell 2 and the electrical connector of the battery housing 1 is increased, and the insulation of the battery cell 2 is improved. The eighth side surface covering area 3321 extends toward the top surface 212 to form the third top surface covering area 3322, and the third top surface covering area 3322 covers a portion of the top surface 212, so that the junction between the third side surface 215 and the top surface 212 (i.e., the edge formed by the intersection of the third side surface 215 and the top surface 212) may be completely covered by the second insulating film unit 332. In this way, the difficulty of film application is reduced, the flatness of film application is improved, warping and air channel phenomena are prevented from occurring, and risks such as poor creepage of the battery cell 2 are also avoided. The first top surface covering area 315 and the second top surface covering area 325 both at least partially overlap with the third top surface covering area 3322, so that gaps are prevented from being generated at the intersections. In this way, the creepage distance between the battery cell 2 and the electrical connector of the battery housing 1 is increased, and the insulation of the battery cell 2 is improved.

As shown in FIG. 2, the shape of the third insulating film unit 341 in this embodiment is completely the same as the shape of the first insulating film unit 331. The third insulating film unit 341 includes a ninth side surface covering area 3411 and a fourth bottom surface covering area 3412. The ninth side surface covering area 3411 is opposite to the seventh side surface covering area 3311, and the fourth bottom surface covering area 3412 is opposite to the third bottom surface covering area 3312. The ninth side surface covering area 3411 covers a portion of the fourth side surface 216. The third side surface covering area 313 and the sixth side surface covering area 323 both at least partially overlap with the ninth side surface covering area 3411, so that gaps are prevented from being generated between the third insulating film unit 341 and the first insulating film 31 and the second insulating film 32 in the first direction. In this way, the creepage distance between the battery cell 2 and the electrical connector of the battery housing 1 is increased, and the insulation of the battery cell 2 is improved. The ninth side surface covering area 3411 extends toward the bottom surface 211 to form the fourth bottom surface covering area 3412, and the fourth bottom surface covering area 3412 is used for covering a portion of the bottom surface 211, so that the junction between the fourth side surface 216 and the bottom surface 211 (i.e., the edge formed by the intersection of the fourth side surface 216 and the bottom surface 211) may be completely covered by the third insulating film unit 341. In this way, the difficulty of film application is reduced, the flatness of film application is improved, warping and air channel phenomena are prevented from occurring, and risks such as poor creepage of the battery cell 2 are also avoided. The first bottom surface covering area 314 and the second bottom surface covering area 324 both at least partially overlap with the fourth bottom surface covering area 3412, so that gaps are prevented from being generated at the intersections. In this way, the creepage distance between the battery cell 2 and the electrical connector of the battery housing 1 is increased, and the insulation of the battery cell 2 is improved.

As shown in FIG. 2, the shape of the fourth insulating film unit 342 in this embodiment is completely the same as the shape of the first insulating film unit 331. The fourth insulating film unit 342 includes a tenth side surface covering area 3421 and a fourth top surface covering area 3422. The tenth side surface covering area 3421 is opposite to the seventh side surface covering area 3311, and the fourth top surface covering area 3422 is opposite to the third bottom surface covering area 3312. The tenth side surface covering area 3421 covers a portion of the fourth side surface 216. The third side surface covering area 313 and the sixth side surface covering area 323 both at least partially overlap with the tenth side surface covering area 3421, so that gaps are prevented from being generated between the fourth insulating film unit 342 and the first insulating film 31 and the second insulating film 32 in the first direction. In this way, the creepage distance between the battery cell 2 and the electrical connector of the battery housing 1 is increased, and the insulation of the battery cell 2 is improved. The tenth side surface covering area 3421 extends toward the top surface 212 to form the fourth top surface covering area 3422, and the fourth top surface covering area 3422 is used for covering a portion of the top surface 212, so that the junction between the fourth side surface 216 and the top surface 212 (i.e., the edge formed by the intersection of the fourth side surface 216 and the top surface 212) may be completely covered by the fourth insulating film unit 342. In this way, the difficulty of film application is reduced, the flatness of film application is improved, warping and air channel phenomena are prevented from occurring, and risks such as poor creepage of the battery cell 2 are also avoided. The first top surface covering area 315 and the second top surface covering area 325 both at least partially overlap with the fourth top surface covering area 3422, so that gaps are prevented from being generated at the intersections. In this way, the creepage distance between the battery cell 2 and the electrical connector of the battery housing 1 is increased, and the insulation of the battery cell 2 is improved.

As shown in FIG. 2, the second side surface covering area 312 and the fifth side surface covering area 322 are spaced apart in the first direction, and the seventh side surface covering area 3311 and the eighth side surface covering area 3321 are spaced apart in the second direction, so that the third side surface 215 is partially exposed to form the first connection portion 217. The third side surface covering area 313 and the sixth side surface covering area 323 are spaced apart in the first direction, and the ninth side surface covering area 3411 and the tenth side surface covering area 3421 are spaced apart in the second direction, so that the fourth side surface 216 is partially exposed to form the first connection portion 217.

As shown in FIG. 2, the first bottom surface covering area 314 and the second bottom surface covering area 324 are spaced apart in the first direction, and the third bottom surface covering area 3312 and the fourth bottom surface covering area 3412 are spaced apart in the third direction, so that the bottom surface 211 is partially exposed to form a second connection portion 218. The second connection portion 218 may be thermally connected to the battery housing 1 of the secondary battery or other adjacent battery cells 2. In this way, the heat transfer efficiency is enhanced, the sealing and durability of the secondary battery are improved, and the secondary battery is thus protected.

In other alternative embodiments, the first insulating film unit 331 may also cover the junction between the third side surface 215 and the bottom surface 211, only cover a portion of the third side surface 215 and the junction between the third side surface 215 and the bottom surface 211, or only cover a portion of the bottom surface 211 and the junction between the third side surface 215 and the bottom surface 211. The second insulating film unit 332 may also cover the junction between the third side surface 215 and the top surface 212, only cover a portion of the third side surface 215 and the junction between the third side surface 215 and the top surface 212, or only cover a portion of the top surface 212 and the junction between the third side surface 215 and the top surface 212. The third insulating film unit 341 may also cover the junction between the fourth side surface 216 and the bottom surface 211, only cover a portion of the fourth side surface 216 and the junction between the fourth side surface 216 and the bottom surface 211, or only cover a portion of the bottom surface 211 and the junction between the fourth side surface 216 and the bottom surface 211. The fourth insulating film unit 342 may also cover the junction between the fourth side surface 216 and the top surface 212, only cover a portion of the fourth side surface 216 and the junction between the fourth side surface 216 and the top surface 212, or only cover a portion of the top surface 212 and the junction between the fourth side surface 216 and the top surface 212.

In other alternative embodiments, the first bottom surface covering area 314 and/or the second bottom surface covering area 324 and/or the third bottom surface covering area 3312 and/or the fourth bottom surface covering area 3412 may also completely cover the bottom surface 211 of the battery cell housing 21, so that the battery cell 2 may only be connected to the battery housing 1 of the secondary battery or other adjacent battery cells 2 through the first connection portion 217. The first bottom surface covering area 314 and/or the second bottom surface covering area 324 and/or the third bottom surface covering area 3312 and/or the fourth bottom surface covering area 3412 may also completely overlap with each other.

In other alternative embodiments, the first top surface covering area 315 and/or the second top surface covering area 325 and/or the top bottom surface 211 covering area, and/or the fourth top surface covering area 3422 may also completely cover the top surface 212 of the battery cell housing 21, but the complete coverage herein refers to the areas on the top surface 212 being completely covered except for structures that need to be exposed such as electrodes and electrolyte injection ports. The first top surface covering area 315 and/or the second top surface covering area 325 and/or the top bottom surface 211 covering area, and/or the fourth top surface covering area 3422 may also completely overlap with each other.

Further, each of the third insulating film 33 and the fourth insulating film 34 covers an end surface of each of the first insulating film 31 and the second insulating film 32 away from the battery cell housing 21, and an end surface of each of the third insulating film 33 and the fourth insulating film 34 facing the first insulating film 31 and the second insulating film 32 has an adhesive layer. The third insulating film 33 and the fourth insulating film 34 are fixedly connected to the first insulating film 31, the second insulating film 32, and the battery cell housing 21 through the adhesive layers, so that the fixation of the insulating film 3 of the entire battery cell housing 21 relative to the battery cell housing 21 is achieved. As such, the first insulating film 31 and the second insulating film 32 no longer need to be provided with separate fixing structures to achieve fixation relative to the battery cell housing 21, so the assembly process is simplified, and costs are reduced.

The first insulating film 31 and the second insulating film 32 in this embodiment are completely fixed by relying on the third insulating film 33 and the fourth insulating film 34. In other alternative embodiments, fixing structures may also be provided on the first insulating film 31 and the second insulating film 32 to achieve fixed connection with the battery cell housing 21.

Each of the third insulating film 33 and the fourth insulating film 34 in this embodiment is specifically a type of single-sided adhesive tape, and the adhesive side of the tape forms the adhesive layer. In other alternative embodiments, the third insulating film 33 and the fourth insulating film 34 may also be provided on end surfaces of the first insulating film 31 and the second insulating film 32 facing the battery cell housing 21. In this case, the portions where the third insulating film 33 and the fourth insulating film 34 overlap with the first insulating film 31 and the second insulating film 32 may be fixed in the form of double-sided adhesive tape, or fixing structures may also be provided on the first insulating film 31 and the second insulating film 32 to achieve fixed connection with the third insulating film 33 and the fourth insulating film 34.

The third insulating film 33 and the fourth insulating film 34 in this embodiment are the same. In other alternative embodiments, the structures of the third insulating film 33 and the fourth insulating film 34 may also be different. For instance, one of them is a single-sided adhesive tape and covers end surfaces of the first insulating film 31 and the second insulating film 32 away from the battery cell housing 21, and the other is a double-sided adhesive tape and covers end surfaces of the first insulating film 31 and the second insulating film 32 facing the battery cell housing 21.

As shown in FIG. 1, a plurality of battery cells 2 are arranged sequentially in the first direction, that is, for two adjacent battery cells 2, the first side surface 213 of one battery cell housing 21 is adjacent to the second side surface 214 of another battery cell housing 21. Each of the third side surface 215 and the fourth side surface 216 of the battery cell housing 21 has the first connection portion 217 exposed from the insulating film 3, and a fixing adhesive layer is provided on the first connection portion 217. The battery cell 2 is directly bonded to the inner wall of the accommodating cavity 11 on the corresponding side through the fixing adhesive layer, so as to achieve fixed connection between the battery cell 2 and the battery housing 1. In this way, the connection strength between the battery cell 2 and the battery housing 1 of the secondary battery is improved, the vibration resistance of the secondary battery is enhanced, and the service life of the secondary battery is extended. Herein, the fixing adhesive layer may be formed by applying fixing glue on the first connection portion 217.

In other alternative embodiments, only the third side surface 215 or the fourth side surface 216 of the battery cell housing 21 may be separately provided with the first connection portion 217 bonded to the inner wall of the accommodating cavity 11. In this embodiment, both the third side surface 215 and the fourth side surface 216 of the battery cell housing 21 are provided with the first connection portion 217 bonded to the inner wall of the accommodating cavity 11, in order to further enhance the connection strength between the battery cell 2 and the battery housing 1, enhance the vibration resistance of the secondary battery, and extend the service life of the secondary battery.

In other alternative embodiments, a plurality of battery cells 2 may also be arranged in the third direction. In this case, the first connection portions 217 on the third side surface 215 and the fourth side surface 216 may be used for bonding between adjacent battery cells 2. The connection between battery cells 2 may reduce collision between the battery cells 2, enhance the vibration resistance of the secondary battery, and extend the service life of the secondary battery. Alternatively, the first connection portions 217 on the third side surface 215 and the fourth side surface 216 may also be used for connection with other external components.

As shown in FIG. 2, the bottom surface 211 of the battery cell housing 21 has the second connection portion 218 exposed from the insulating film 3, and a thermally-conductive adhesive layer is provided on the second connection portion 218. The battery cell 2 is directly bonded to the inner wall of the accommodating cavity 11 on the corresponding side through the thermally-conductive adhesive layer, so that thermally-conductive connection between the battery cell 2 and the battery housing 1 is achieved. Herein, the thermally-conductive adhesive layer may be formed by applying a thermally-conductive adhesive on the second connection portion 218.

As a material with high strength, high temperature resistance, and strong thermal conductivity, the thermally-conductive adhesive may effectively protect the battery cell 2 of the secondary battery. The thermally-conductive adhesive may withstand high temperature environments, reduce temperature differences, and prevent spontaneous combustion or melting of the battery cell 2 and electrodes, so that the stability and reliability of the secondary battery are enhanced. During operation, the secondary battery generates a large amount of heat. If the heat cannot be dissipated in time, it will cause dangers such as fire and explosion of the secondary battery. The thermally-conductive adhesive may serve as an excellent heat conduction medium to quickly transfer the heat inside the secondary battery out, so that stable operation of the secondary battery is ensured. The high thermal conductivity of the thermally-conductive adhesive may improve the overall heat dissipation efficiency and heat transfer speed of the secondary battery, so that the service life and stability of the secondary battery are improved. In order to ensure the long-term stability of the secondary battery, it is necessary to ensure the sealing performance inside the secondary battery. The thermally-conductive adhesive may fill the gaps and cracks inside the secondary battery to form a high-strength sealing layer and prevent gas and moisture from invading the inside of the secondary battery, so that the environmental stability inside the secondary battery is ensured. The thermally-conductive adhesive has good heat resistance, cold resistance, and durability characteristics, and may withstand different temperatures and climate conditions. This enables the thermally-conductive adhesive to maintain its original performance and life cycle in various complex environments, and the service life of the secondary battery is thus extended.

In other alternative embodiments, the second connection portion 218 may also be used for thermally-conductive connection between adjacent battery cells 2. Alternatively, the second connection portion 218 may also be used for thermally-conductive connection with other external components.

The following briefly describes the process of the insulating film 3 covering the battery cell housing 21 in combination with the specific structures of the insulating film 3 and the battery cell housing 21 described in the foregoing paragraphs.

In step S1, as shown in FIG. 5, first, the first insulating film 31 is covered on the first side surface 213, so that the first side surface covering area 311 covers the first side surface 213, and the second insulating film 32 is covered on the second side surface 214, so that the fourth side surface covering area 321 covers the second side surface 214.

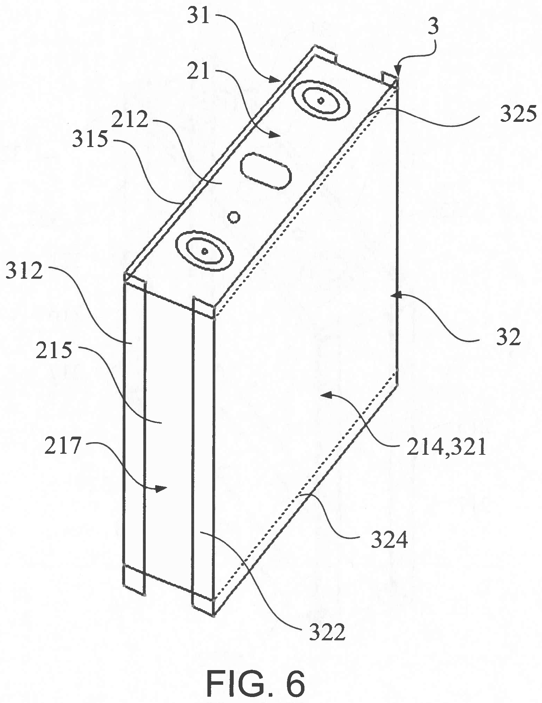

In step S2, as shown in FIG. 6, the first insulating film 31 is folded, so that the second side surface 214 covering area covers a portion of the third side surface 215 and the third side surface covering area 313 covers a portion of the fourth side surface 216, and second insulating film 32 is folded, so that the fifth side surface covering area covers a portion of the third side surface 215 and the sixth side surface covering area 323 covers a portion of the fourth side surface 216.

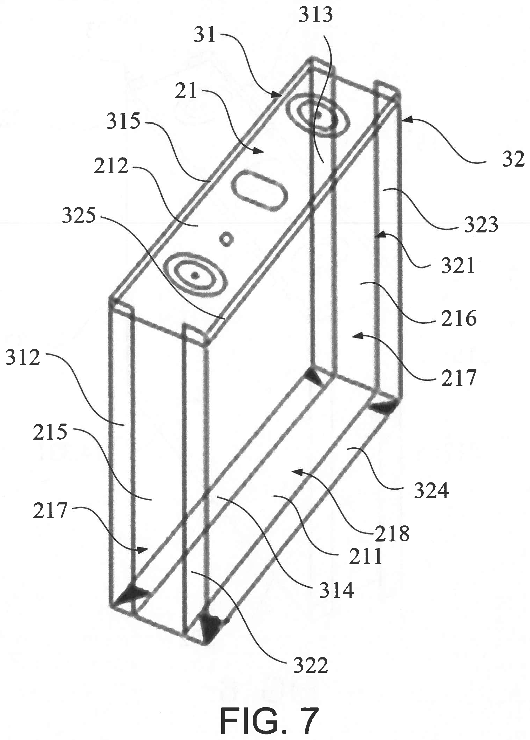

In step S3, as shown in FIG. 7, the first insulating film 31 is folded, so that the first bottom surface 211 covering area covers a portion of the bottom surface 211, and the second insulating film 32 is folded, so that the second bottom surface 211 covering area covers a portion of the bottom surface 211.

It should be understood that in other alternative embodiments, step S3 may also be executed before step S2.

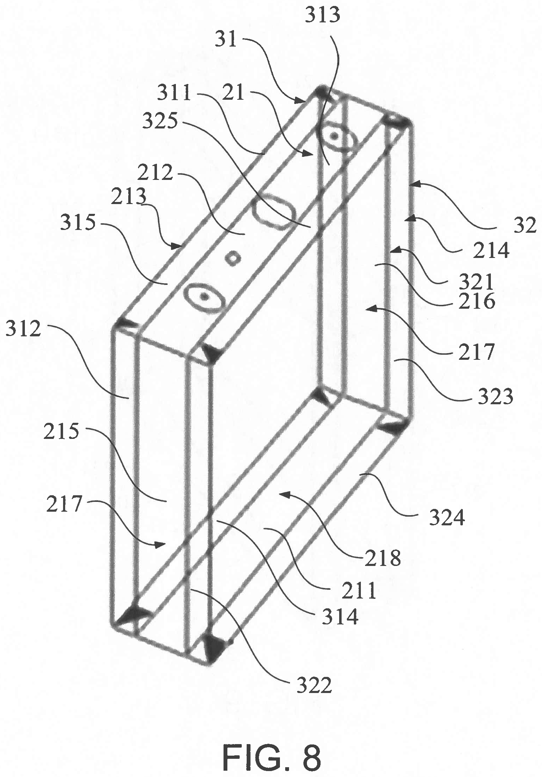

In step S4, as shown in FIG. 8, the first insulating film 31 is folded, so that the first top surface 212 covering area covers a portion of the top surface 212, and the second insulating film 32 is folded, so that the second top surface 212 covering area covers a portion of the top surface 212.

It should be understood that in other alternative embodiments, step S4 may also be executed before step S3, or step S4 may also be executed before step S2.

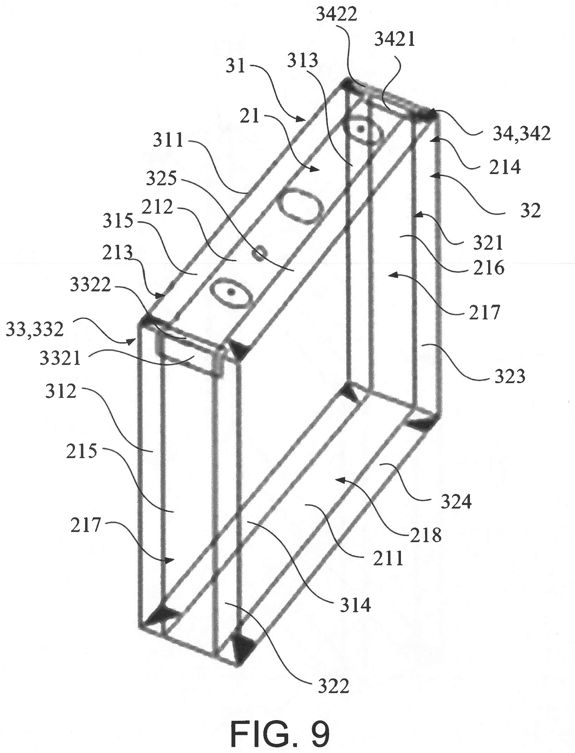

In step S5, as shown in FIG. 9, the second insulating film unit 332 and the fourth insulating film unit 342 are adhered to the top of the battery cell housing 21, so as to achieve the fixation of the upper end of the insulating film 3.

In step S6, as shown in FIG. 2, the first insulating film unit 331 and the third insulating film unit 341 are adhered to the bottom of the battery cell housing 21, so as to achieve the fixation of the lower end of the insulating film 3.

It should be understood that in other alternative embodiments, step S6 may also be executed before step S5.

In the description of the present disclosure, it should be understood that the orientation or positional relationships indicated by the terms "upper", "lower", "front", "rear", "left", "right", "vertical", "horizontal", "top", "bottom", "inner", "outer", etc. are based on the orientation or positional relationships of the device or component as shown in the accompanying drawings, and are only for the convenience of describing the present disclosure and simplifying the description, rather than indicating or implying that the referred device or component must have a specific orientation, be constructed and operated in a specific orientation, and therefore, should not be understood as a limitation to the present disclosure.

Although specific embodiments of the present disclosure have been described above, a person having ordinary skill in the art should understand that these are only examples. The protection scope of the present disclosure is defined by the appended claims. A person having ordinary skill in the art can make various changes or modifications to these embodiments without departing from the principles and essence of the present disclosure, but these changes and modifications all fall within the protection scope of the present disclosure.

## Claims

1. An insulating film for a battery cell housing, the battery cell housing comprising a bottom surface and a top surface opposite to each other, a first side surface and a second side surface opposite to each other, and a third side surface and a fourth side surface opposite to each other, **characterized in that** the insulating film for the battery cell housing comprises a first insulating film, a second insulating film, a third insulating film, and a fourth insulating film independent of one another,
the first insulating film and the second insulating film are opposite to each other and spaced apart in a first direction, the first insulating film is used for covering the first side surface, and the second insulating film is used for covering the second side surface,
the third insulating film and the fourth insulating film are arranged opposite to each other, the third insulating film is used for at least covering a junction between the third side surface and the bottom surface and a junction between the third side surface and the top surface, so that the third side surface is partially exposed, and the fourth insulating film is used for at least covering a junction between the fourth side surface and the bottom surface and a junction between the fourth side surface and the top surface, so that the fourth side surface is partially exposed,
wherein the first direction is a spacing direction between the first side surface and the second side surface.

2. The insulating film for the battery cell housing according to claim 1, **characterized in that**
the third insulating film is used for covering a portion of the third side surface, the fourth insulating film is used for covering a portion of the fourth side surface, and two ends of each of the third insulating film and the fourth insulating film in the first direction are connected to both the first insulating film and the second insulating film.

3. The insulating film for the battery cell housing according to claim 2, **characterized in that**
the third insulating film comprises a first insulating film unit and a second insulating film unit independent of each other, the first insulating film unit and the second insulating film unit are spaced apart in a second direction, the first insulating film unit is used for at least covering the junction between the third side surface and the bottom surface and a portion of the third side surface, the second insulating film unit is used for at least covering the junction between the third side surface and the top surface and a portion of the third side surface, and two ends of each of the first insulating film unit and the second insulating film unit in the first direction are connected to both the first insulating film and the second insulating film, and
the fourth insulating film comprises a third insulating film unit and a fourth insulating film unit independent of each other, the third insulating film unit and the fourth insulating film unit are spaced apart in the second direction, the third insulating film unit is used for at least covering the junction between the fourth side surface and the bottom surface and a portion of the fourth side surface, the fourth insulating film unit is used for at least covering the junction between the fourth side surface and the top surface and a portion of the fourth side surface, and two ends of each of the third insulating film unit and the fourth insulating film unit in the first direction are connected to both the first insulating film and the second insulating film,
wherein the second direction is a spacing direction between the bottom surface and the top surface.

4. The insulating film for the battery cell housing according to claim 3, **characterized in that**
the first insulating film comprises a first side surface covering area, a second side surface covering area, a third side surface covering area, a first bottom surface covering area, and a first top surface covering area, the first side surface covering area is used for covering the first side surface, the first side surface covering area extends toward the third side surface to form the second side surface covering area, the second side surface covering area is used for covering a portion of the third side surface, the first side surface covering area extends toward the fourth side surface to form the third side surface covering area, the third side surface covering area is used for covering a portion of the fourth side surface, the first side surface covering area extends toward the bottom surface to form the first bottom surface covering area, the first bottom surface covering area is used for covering at least a portion of the bottom surface, the first side surface covering area extends toward the top surface to form the first top surface covering area, and the first top surface covering area is used for covering at least a portion of the top surface,
the second insulating film comprises a fourth side surface covering area, a fifth side surface covering area, a sixth side surface covering area, a second bottom surface covering area, and a second top surface covering area, the fourth side surface covering area is used for covering the second side surface, the fourth side surface covering area extends toward the third side surface to form the fifth side surface covering area, the fifth side surface covering area is used for covering a portion of the third side surface, the fourth side surface covering area extends toward the fourth side surface to form the sixth side surface covering area, the sixth side surface covering area is used for covering a portion of the fourth side surface, the fourth side surface covering area extends toward the bottom surface to form the second bottom surface covering area, the second bottom surface covering area is used for covering at least a portion of the bottom surface, the fourth side surface covering area extends toward the top surface to form the second top surface covering area, and the second top surface covering area is used for covering at least a portion of the top surface, and
the second side surface covering area and the fifth side surface covering area are spaced apart in the first direction, and the third side surface covering area and the sixth side surface covering area are spaced apart in the first direction.

5. The insulating film for the battery cell housing according to claim 4, **characterized in that**
the first insulating film unit comprises a seventh side surface covering area and a third bottom surface covering area, the seventh side surface covering area is used for covering a portion of the third side surface, both the second side surface covering area and the fifth side surface covering area at least partially overlap with the seventh side surface covering area, the seventh side surface covering area extends toward the bottom surface to form the third bottom surface covering area, the third bottom surface covering area is used for covering at least a portion of the bottom surface, and both the first bottom surface covering area and the second bottom surface covering area at least partially overlap with the third bottom surface covering area,
the second insulating film unit comprises an eighth side surface covering area and a third top surface covering area, the eighth side surface covering area is used for covering a portion of the third side surface, both the second side surface covering area and the fifth side surface covering area at least partially overlap with the eighth side surface covering area, the eighth side surface covering area extends toward the top surface to form the third top surface covering area, the third top surface covering area is used for covering at least a portion of the top surface, and both the first top surface covering area and the second top surface covering area at least partially overlap with the third top surface covering area,
the third insulating film unit comprises a ninth side surface covering area and a fourth bottom surface covering area, the ninth side surface covering area is used for covering a portion of the fourth side surface, both the third side surface covering area and the sixth side surface covering area at least partially overlap with the ninth side surface covering area, the ninth side surface covering area extends toward the bottom surface to form the fourth bottom surface covering area, the fourth bottom surface covering area is used for covering at least a portion of the bottom surface, and both the first bottom surface covering area and the second bottom surface covering area at least partially overlap with the fourth bottom surface covering area, and
the fourth insulating film unit comprises a tenth side surface covering area and a fourth top surface covering area, the tenth side surface covering area is used for covering a portion of the fourth side surface, both the third side surface covering area and the sixth side surface covering area at least partially overlap with the tenth side surface covering area, the tenth side surface covering area extends toward the top surface to form the fourth top surface covering area, the fourth top surface covering area is used for covering at least a portion of the top surface, and both the first top surface covering area and the second top surface covering area at least partially overlap with the fourth top surface covering area.

6. The insulating film for the battery cell housing according to claim 5, **characterized in that**
at least one of the third insulating film and the fourth insulating film covers an end surface of each of the first insulating film and the second insulating film away from the battery cell housing, and an end surface of each of the third insulating film and/or the fourth insulating film facing the first insulating film and the second insulating film has an adhesive layer.

7. The insulating film for the battery cell housing according to claim 4, **characterized in that**
the first bottom surface covering area and the second bottom surface covering area are spaced apart in the first direction, and the third insulating film and the fourth insulating film are spaced apart in a third direction, so that the bottom surface is partially exposed,
wherein the third direction is a spacing direction between the third side surface and the fourth side surface.

8. A battery cell, **characterized in** comprising:
a battery cell housing, a battery cell assembly, and the insulating film for the battery cell housing according to any one of claims 1 to 7, wherein the battery cell assembly is accommodated in the battery cell housing, and the insulating film for the battery cell housing covers an outer surface of the battery cell housing,
the outer surface of the battery cell housing comprises a bottom surface and a top surface opposite to each other, a first side surface and a second side surface opposite to each other, and a third side surface and a fourth side surface opposite to each other, the first insulating film covers the first side surface, the second insulating film covers the second side surface, the third insulating film at least covers the junction between the third side surface and the bottom surface and the junction between the third side surface and the top surface, so that the third side surface is partially exposed, and the fourth insulating film at least covers the junction between the fourth side surface and the bottom surface and the junction between the fourth side surface and the top surface, so that the fourth side surface is partially exposed.

9. A secondary battery, **characterized in** comprising:
a battery housing and a plurality of battery cells according to claim 8,
wherein the battery housing has an accommodating cavity, the plurality of battery cells are all accommodated in the accommodating cavity, and the plurality of battery cells are arranged sequentially in the first direction.

10. The secondary battery according to claim 9, **characterized in that** the secondary battery satisfies one or more of the following conditions:
a. the third side surface and/or the fourth side surface is partially exposed to form a first connection portion of the battery cell housing, a fixing adhesive layer is provided on the first connection portion, and the battery cell is bonded to an inner wall of the accommodating cavity or an adjacent battery cell through the fixing adhesive layer; and
b. the bottom surface is partially exposed to form a second connection portion of the battery cell housing, a thermally-conductive adhesive layer is provided on the second connection portion, and the battery cell is bonded to the inner wall of the accommodating cavity or an adjacent battery cell through the thermally-conductive adhesive layer.
